# EUROPÄISCHE PATENTSCHRIFT

(11) **EP 3 046 686 B1**
(45) Veröffentlichungstag und Bekanntmachung des Hinweises auf die Patenterteilung: **07.11.2018**
(21) Anmeldenummer: 14766399.1
(22) Anmeldetag: 05.09.2014
(51) Int. Cl.: F26B 3/30, B29C 71/04, B29C 35/08, B29B 13/06, B29C 37/00, B29C 35/04

(54) **GASSTROMVORRICHTUNG FÜR ANLAGE ZUR STRAHLUNGSBEHANDLUNG VON SUBSTRATEN**
GAS STREAM DEVICE FOR SYSTEM FOR THE RADIATION TREATMENT OF SUBSTRATES
DISPOSITIF POUR MAINTENIR UN FLUX DE GAZ POUR UNE INSTALLATION DE TRAITEMENT DE SUBSTRATS AU MOYEN D'UN RAYONNEMENT

(30) Priorität: 20.09.2013 DE 102013015580
(43) Veröffentlichungstag der Anmeldung: 27.07.2016
(73) Patentinhaber: Oerlikon Surface Solutions AG, Pfäffikon, 8808 Pfäffikon (CH)
(72) Erfinder: RIBEIRO, Carlos, Ho Chi Minh City (VN)
(74) Vertreter: Misselhorn, Hein-Martin
(86) Internationale Anmeldenummer: PCT/EP2014/002406
(87) Internationale Veröffentlichungsnummer: WO 2015/039732

(56) Entgegenhaltungen:
- EP-A1- 2 392 442
- DE-A1- 1 953 074
- DE-A1-102004 030 674
- DE-A1-102012 017 230
- DE-U1- 9 306 998
- FR-A1- 2 599 485
- US-A- 4 336 279
- US-A- 4 591 724
- US-A- 5 641 451
- US-A- 6 072 158

## Beschreibung

Die vorliegende Erfindung bezieht sich auf eine Anlage zum Bestrahlen eines Substrates mit elektromagnetischer Strahlung, wie zum Beispiel Infrarotstrahlung (IR-Strahlung) zum Trocknen von Substraten und/oder ultraviolette Strahlung (UV-Strahlung) zum Vernetzen von UV-härtenden Lacken.

Solche Anlagen kommen beispielsweise als Bestandteil von Lackieranlagen zum Einsatz. Bei solchen Lackieranlagen wird in einem ersten Schritt die Substratoberfläche typischerweise gereinigt. Dies kann beispielsweise mit Hilfe von Luftdruck und/oder mit Mitteln zum Ionisieren der Oberfläche gemacht werden bzw. mittels Bestrahlen der Oberfläche mit einem flüssigem Medium, wie Wasser oder wässrige bzw. alkoholische oder lösemittelhaltige Lösung, oder mit einem Festkörper, wie Strahlgut oder CO₂, oder mittels Tauchen der Substrate in eine wässrige bzw. alkoholische oder lösemittelhaltige Lösung, eventuell unter Einwirkung von Wellen, wie Ultraschall- oder Mikrowellen.

Im Falle der Reinigung mit flüssigen Medien kann es zur sich anschliessenden Trocknung bereits zum Einsatz von IR Wärmestrahlen kommen.

In einem zweiten Schritt wird dann die eigentliche Lackschicht beispielsweise mittels Aufsprühen einer Lackdispersion aufgebracht. Es folgt ein Schritt, während dessen das bereits belackte Substrat ausgebacken wird. Dies kann mittels Erwärmung in Umluft und/oder mittels Beaufschlagung mit Infrarotstrahlung (IR) bei zum Beispiel 50-80°C erfolgen. Dabei wird im Wesentlichen das üblicherweise in der Lackdispersion vorhandene Lösungsmittel verdunstet. Im Falle eines heute sehr weit verbreiteten UV-härtenden Lacks, d.h. eines Lackes, der mittels UV Licht vernetzt wird, erfolgt diese Härtung in einem der Lösungsmittelverdunstung sich anschliessenden Schritt. Entsprechend der Anwendung kommen bei diesen Prozessschritten IR- und/oder UV-Lampen zum Einsatz. In der vorliegenden Beschreibung wird der Prozess der Trocknung mittels IR-Strahlung und/oder der Prozess der Vernetzung mittels UV-Strahlung einheitlich als Strahlungsbehandlung bezeichnet.

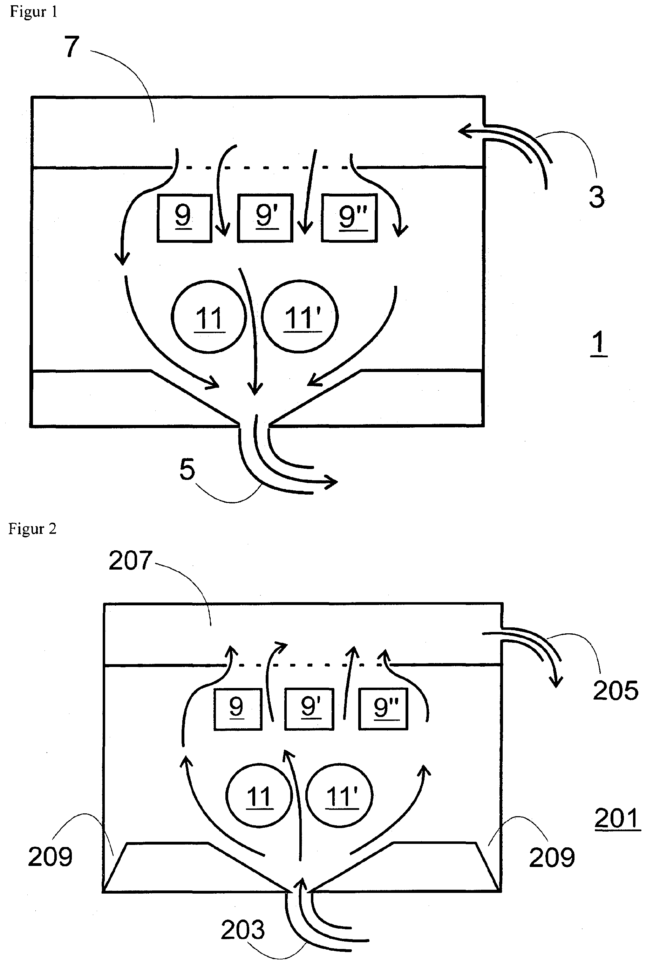

Um die freie Verflüchtigung der Lösungsmittel in die Umwelt bzw. in das Arbeitsumfeld zu verhindern, werden solche Prozesse gemäss Stand der Technik in Behandlungskammern durchgeführt. Es sollte dabei gewährleistet sein, dass es zu einem beständigen Gasaustausch kommt, um beispielsweise die Lösungsmittelkonzentration in der Substratumgebung niedrig zu halten und damit auch den Trocknungs- und/oder Vernetzungsprozess zu beschleunigen. Gemäss Stand der Technik wird, wie in Figur 1 schematisch dargestellt, die Strahlungsbehandlung in einer geschlossenen Kammer 1 durchgeführt. Dabei werden im oberen Teil der Kammer 1 die Strahlungsquelle 9, 9', 9" vorgesehen und im unteren Teil die mit den Substraten zu bestückenden Substrathalter 11, 11' platziert. Gezeigt als Substrathalter sind in der Figur 1 zwei Spindeln, welche mit zu bestrahlenden Komponenten bestückt werden können. Die Platzierung der Strahlungsquellen 9, 9', 9" unterhalb der Substrathalter 11, 11' wäre auch möglich, wird aber in der Regel vermieden, um nicht zu riskieren, dass die Strahlungsquellen 9, 9', 9" mit von den Substraten herabtropfenden Lackresten verschmutzt werden.

Gemäss Stand der Technik wird an der Kammerdecke ein Einströmbereich 7 vorgesehen, durch den, gespeist von einem Einlass 3, Gas wie zum Beispiel Luft in die Kammer strömt. Das Gas strömt gemäss Stand der Technik an den Strahlungsquellen 9, 9', 9"und anschliessend an den Substraten 11, 11' vorbei in den unteren Bereich der Kammer, wo es über den Auslass 5 aus der Kammer 1 abgesogen wird. Aufgrund dieser Anordnung gemäss Stand der Technik wirken Strömung und Gravitation zusammen, so dass Verschmutzungen, wie zum Beispiel Staub und auch Lösungsmittel effektiv abgesaugt werden. In der Figur 1 ist der Gasstrom und dessen Richtung schematisch durch Pfeile dargestellt.

Eine derartige Ausführungsform wird in US 4 591 724, die den Oberbegriff des Anspruchs 1 offenbart, beschrieben. Dort wird Luft zur Kühlung von elliptischen Spiegeln, der UV-Strahlungsquelle sowie der Durchführungsvorrichtung von linienförmigen zu bestrahlenden Substraten in eine Kammer eingeblasen. Dabei wird die Luft von oben in das Spiegelinnere eingeleitet und die UV-Strahlungsquellen umströmt, bevor sie zur Durchführungsvorrichtung der linienförmigen zu bestrahlenden Substrate gelangt, um danach aus der Spiegelanordnung zu entweichen.

Nachteilig bei der Anordnung gemäss dem Stand der Technik ist allerdings, dass der Gasstrom, welcher an den Substraten vorbeiströmt, zunächst die Strahlungsquellen passieren muss. Diese sind im Betrieb in der Regel heiss, was zu einer unkontrollierten Erwärmung des Gasstromes führt. Dies bedeutet, dass die Substrathalter 11, 11' mit einem Gasstrom beaufschlagt werden, welcher keine definierte Temperatur besitzt und bei dem es über die Breite der Substrathalter sogar zu Temperaturgradienten kommen kann. Der Prozess des Trocknens und/oder Vernetzens wird jedoch stark von der vorherrschenden Temperatur beeinflusst. Undefinierte Temperaturbedingungen führen daher schnell zu einem unkontrollierten Prozess. Insbesondere wenn Temperaturgradienten vorliegen, kommt es zu Inhomogenitäten. Die Problematik wird dadurch noch verschärft, dass die Strahlungsquellen selbst in der Regel nicht temperaturstabilisiert sind. In der Anfangsphase werden die Strahlungsquellen eher kühl sein, während sie nach längerem Betrieb doch deutlich aufheizen. Dieses Problem könnte zwar durch explizite Kühlmassnahmen an den Strahlungsquellen reduziert werden. Allerdings sind solche Massnahmen mit erheblichem technischen Aufwand verbunden und somit teuer.

Nach dem oben Gesagten wäre es wünschenswert, eine Anlage zur Strahlungsbehandlung zur Verfügung zu haben, mit der die oben geschilderten Probleme des Standes der Technik abgemildert und vorzugsweise vollständig überwunden werden.

Der Erfindung liegt daher die Aufgabe zugrunde, eine solche Anlage anzugeben.

Erfindungsgemäss werden die oben geschilderten Probleme durch eine Anlage gemäss Anspruch 1 gelöst. Die abhängigen Ansprüche stellen bevorzugte Ausführungsformen der vorliegenden Erfindung dar. Prinzipiell wurden die Probleme erfindungsgemäss dadurch gelöst, dass in der Kammer ein Gasstrom aufgebaut wird, welcher unmittelbar nach Eintritt in die Kammer an den Substraten vorbeiströmt. Da der Gasstrom zuvor nicht an den eventuell Wärme ausstrahlenden Strahlungsquellen vorbeiströmt, ist die Temperatur des Gasstroms wohldefiniert und kann auch in einfacher Weise auf einen gewünschten stabilen Wert eingestellt werden.

Die Erfindung und deren vorteilhafte Ausführungsformen werden nun anhand von Figuren im Detail beispielhaft beschrieben.
- Figur 1: zeigt eine Anlage zur Strahlungsbehandlung von Substraten gemäss dem Stand der Technik.
- Figur 2: zeigt eine erfindungsgemässe Anlage zur Strahlungsbehandlung von Substraten gemäss einer nicht erfindungsgemäßen Ausführungsform.
- Figur 3: zeigt eine erfindungsgemässe Anlage zur Strahlungsbehandlung von Substraten gemäss einer nicht erfindungsgemäßen Ausführungsform.
- Figur 4: zeigt eine erfindungsgemässe Anlage zur Strahlungsbehandlung von Substraten gemäss einer erfindungsgemäßen Ausführungsform.
- Figur: 5 zeigt schematisch das mögliche Layout einer Lackieranlage, welche Strahlungsbehandlungskammern gemäss der vorliegenden Erfindung umfasst.

Figur 2 zeigt eine nicht erfindungsgemässe Anlage gemäss einer ersten Ausführungsform. Gezeigt ist eine Kammer 201, in der Strahlungsquellen 9, 9',9" und zu bestrahlende Substrate 11, 11' angeordnet sind. In der Kammer ist unten, in der Nachbarschaft der Substrate 11, 11', ein Gaseinlass 203 vorgesehen. Im Bereich der Kammerdecke ist gemäss dieser Ausführungsform der Gasauslass 205 vorgesehen, dem eine Deckenkammer 207 vorgeschaltet sein kann. Im Betrieb der Anlage strömt nun das Gas nach dem Eintritt in die Kammer zunächst an den Substraten 11, 11' vorbei, bevor es die Strahlungsquellen 9, 9', 9" umströmt und durch die optionale Deckenkammer 207 über den Gasauslass 205 hinausströmt. Auf diese Weise ist die Temperatur des an den Substraten 11, 11' vorbeiströmenden Gases wohldefiniert und der Prozess kann bei genau vorgegebenen und stabilen Temperaturverhältnissen stattfinden. Es ist vorteilhaft, an den Randbereichen der Kammer Einformungen 209 vorzusehen, welche als Staubfänger fungieren können.

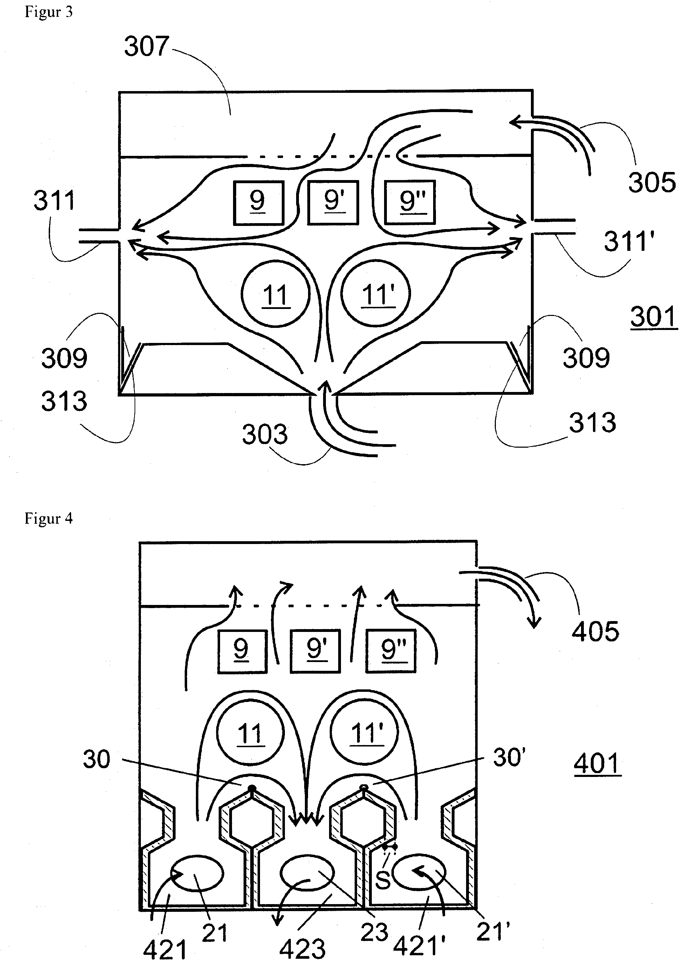

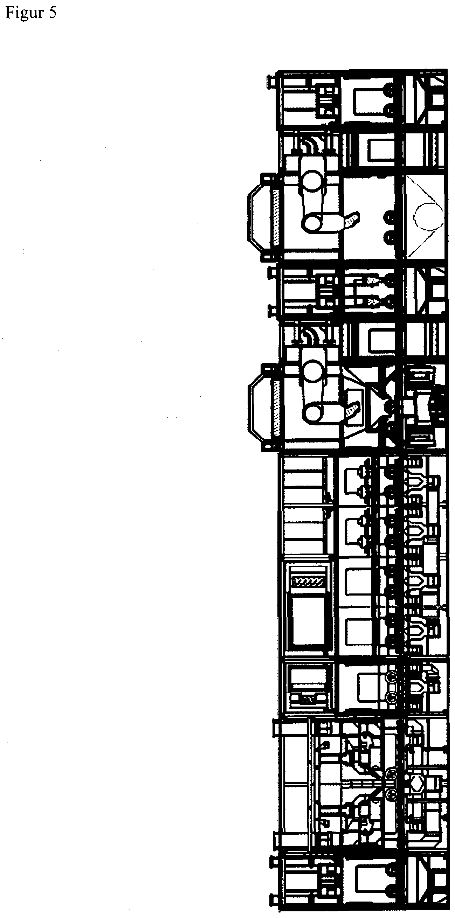

Eine zweite vorteilhafte, nicht erfindungsgemäße Ausführungsform der vorliegenden Erfindung ist in Figur 3 gezeigt. Hierbei wird eine Kammer 301 mit Strahlungsquellen 9, 9',9", welche über Substraten 11, 11' angeordnet sind, sowohl durch einen ersten Einlass 303 im unteren Bereich der Kammer, unterhalb der Substrate 11, 11', als auch durch einen zweiten Einlass 305 im oberen Bereich der Kammer, oberhalb der Strahlungsquellen 9, 9', 9", mit Gasflüssen beaufschlagt. Vorzugsweise auf halber Höhe der Kammer sind Auslässe 311, 311' vorgesehen, die bevorzugt symmetrisch angeordnet sind. Die beiden Gasströme treffen bei dieser Ausführungsform, wie in der Figur mittels Pfeile angedeutet, in etwa auf halber Höhe, d.h. zwischen Strahlungsquellen 9, 9', 9" und Substraten 11, 11' aufeinander und entweichen über die seitlich angeordneten Auslässe 311, 311' aus dem Kammerinnern. Diese nicht erfindungsgemäße Ausführungsform hat insbesondere den Vorteil, dass im Gasstrom mittransportierte Staubpartikel tendenziell an den Kammerrand transportiert werden. Sind dort dann noch Einformungen 309 vorgesehen, welche als Staubfänger fungieren können, so wird eventuell in der Kammer vorhandener Staub, der hauptsächlich in Richtung zu den Auslässen 311, 311' transportiert wird, aber unterwegs aus dem Gasstrom ausscheidet, hauptsächlich in den Staubfängern aufgesammelt. Gemäss einer weiteren nicht erfindungsgemäßen Ausführungsform ist in den Einformungen 309 jeweils ein herausnehmbares Gefäss 313 vorgesehen, so dass sich in diesem Gefäss der Staub sammelt und dieser durch Herausnahme und Leerung des Gefässes einfach entsorgt werden kann. Natürlich lässt sich ein solches Gefäss auch bei den anderen Ausführungsformen vorteilhaft einsetzen.

Vorliegend wurde eine Anlage zur Strahlungsbehandlung von Substraten offenbart, welche in einer Kammer über den Substrathaltern zum Bestücken von zu behandelnden Substraten mindestens eine Strahlungsquelle umfasst und die Kammer Mittel zur Aufrechterhaltung eines Gasstromes in der Kammer mit zumindest einem Gaseinlass und zumindest einem Gasauslass umfasst, dadurch gekennzeichnet, dass der zumindest eine Gaseinlass im Bereich der Substrathalters angeordnet ist, dergestalt, dass durch den zumindest einen Gaseinlass einströmendes Gas zunächst die Substrathalter umströmt, bevor es entweder direkt und/oder nach Umströmung der mindestens einen Strahlungsquelle durch den Gasauslass wieder die Kammer verlässt.

Bei der Anlage kann der Gasauslass im Bereich der mindestens einen Strahlungsquelle vorgesehen sein, dergestalt, dass das Gas nach Umströmung der Substrathalter die mindestens eine Strahlungsquelle umströmt, bevor es über den Gasauslass die Kammer verlässt.

Der Gasauslass kann auf einer Höhe zwischen Substrathalter und mindestens einer Strahlungsquelle vorgesehen sein.

Im Bereich der mindestens einen Strahlungsquelle kann ein zweiter Gaseinlass vorgesehen sein, dergestalt, dass durch den zweiten Gaseinlass einströmendes Gas zunächst die mindestens eine Strahlungsquelle umströmt, bevor es auf das von den Substrathaltern heranströmende Gas trifft und mit diesem durch den Gasauslass aus der Kammer hinausströmt.

Am unteren Kammerrand können Einformungen vorgesehen sein, derart, dass im Bereich der Einformungen die Strömung herabgesetzt ist und die Einformungen dementsprechend als Staubfänger Wirkung entfalten.

Es können in den Einformungen herausnehmbare Gefässe vorgesehen sein.

Eine Ausführungsform der vorliegenden Erfindung ist in Figur 4 gezeigt. Hierbei wird eine Kammer 401 mit Strahlungsquellen 9, 9',9", welche über Substraten 11, 11' angeordnet sind, sowohl durch Einlässe 421, 421' im unteren Bereich der Kammer, unterhalb der Substrate 11, 11', mit Gasflüssen beaufschlagt. Das oder die Gase umströmen die Substrate 11, 11' und treten zum Teil durch einen Gasauslass 423 im unteren Bereich der Kammer und zum Teil durch einen Gasauslass 405 im oberen Bereich der Kammer aus. Gemäss der vorliegenden Ausführungsform umfassen die Gaseinlass- und/oder Gasauslassvorrichtungen 421,421' bzw. 423 in einer Dimension sich in Strömungsrichtung verjüngende und weiter in Strömungsrichtung wieder verbreiternde Strömungskanäle, dergestalt, dass im Wesentlichen zumindest an den Gasflussvorrichtungen laminare Strömung vorliegt und es daher nicht aufgrund von Turbulenzen zu Ablagerungen (wie beispielsweise Staub oder Schmutz) kommt. Die Strömungskanäle sind in einer besonders bevorzugten Variante dieser Ausführungsform aus verformbarem Plattenmaterial, beispielsweise aus Blech, geformt. In der Figur 4 sind diese jeweils doppelwandig ausgeführt gezeigt, wobei die zwei Wände durch einen Spalt S von beispielsweise 20 mm voneinander beabstandet ausgeführt sind. Der Spalt bedingt eine thermische Isolation, die u.a. deswegen von Vorteil ist, weil in der Kammer aufgrund der bei einer Trocknung eingesetzten heissen Luft durchaus Temperaturen von 100°C und mehr auftreten können. Das Gas strömt durch die runden Öffnungen 21, 21' der Gaseinlassvorrichtungen 421, 421' ein und zum Teil durch die runden Öffnungen 23 der Gasauslassvorrichtungen 423 aus.

Gemäss einer bevorzugten Ausführungsform weisen die einzelnen Gasflussvorrichtungen im oberen Teil Nasen auf, die es gestatten, jeweils zwei Gasflussvorrichtungen mittels beispielsweise einer Klammerschiene oder mittels Kappen 30, 30' zusammen zu halten, wodurch zum Beispiel auch die Aufrechterhaltung der laminaren Strömung auch in diesem Bereich ermöglicht wird.

Insbesondere offenbart die vorliegende Erfindung eine Anlage zur Strahlungsbehandlung 401 von Substraten, welche in einer Kammer über den Substrathaltern 11, 11' zum Bestücken von zu behandelnden Substraten mindestens eine Strahlungsquelle 9, 9', 9" umfasst und die Kammer Mittel zur Aufrechterhaltung eines Gasstromes in der Kammer mit einer Gasflussvorrichtung mit zumindest einem Gaseinlass 421, 421' und zumindest einem Gasauslass 423, 405 umfasst, wobei die Gasflussvorrichtung im Bereich unterhalb des Substrathalters 11, 11' angeordnet ist und dergestalt ausgebildet ist, dass Gaseinlass 421, 421 ' und Gasauslass 423, 405 Elemente umfassen, welche in Stromrichtung sich verjüngende und weiter Stromabwärts sich wieder verbreiternde Strömungskanäle bilden, wodurch beim Betrieb der Anlage im Wesentlichen zumindest an der Gasflussvorrichtung eine laminare Strömung herrscht und es daher nicht aufgrund von Turbulenzen zu Ablagerungen kommt. Vorzugsweise sind die die Strömungskanäle bildenden Elemente der Anlage zur Strahlungsbehandlung 401 aus verformbaren Platten, vorzugsweise aus Blech, geformt.

Vorzugsweise werden zumindest zwei der die Strömungskanäle bildenden Elemente im oberen Bereich mittels Schienen, Klammern und oder Kappen 30, 30' zusammengehalten, wodurch eine einfache Montage und/oder Demontage ermöglicht ist.

Vorzugsweise sind die die Strömungskanäle bildenden Elemente zumindest doppelwandig, wobei die zumindest zwei Wände beabstandet sind, wodurch ein thermisch isolierender Spalt S gebildet wird.

## Patentansprüche

1. Anlage zur Strahlungsbehandlung von Substraten, welche in einer Kammer über den Substrathaltern (11, 11') zum Bestücken von zu behandelnden Substraten mindestens eine Strahlungsquelle (9, 9', 9") umfasst, die Kammer umfasst Mittel zur Aufrechterhaltung eines Gasstromes in der Kammer in Gestalt einer Gasflussvorrichtung, wobei die Gasflussvorrichtung zumindest einen im Bereich unterhalb des Substrathalters (11, 11') angeordneten Gaseinlass (421, 421') und zumindest einen im Bereich unterhalb des Substrathalters (11, 11') angeordneten Gasauslass (423) umfasst, **dadurch gekennzeichnet, dass** die Gasflussvorrichtung dergestalt ausgebildet ist, dass der Gaseinlass (421, 421') und der besagte Gasauslass (423) Elemente umfassen, welche sich in Stromrichtung sich verjüngende und weiter Stromabwärts sich wieder verbreiternde Strömungskanäle bilden, wodurch beim Betrieb der Anlage im Wesentlichen zumindest an der Gasflussvorrichtung eine laminare Strömung herrscht und es daher nicht aufgrund von Turbulenzen zu Ablagerungen kommt, wobei die Gasflussvorrichtung so beschaffen ist, dass in der Kammer ein Gasstrom aufgebaut wird, welcher unmittelbar nach Eintritt in die Kammer und Passieren der Strömungskanäle an den Substraten vorbeiströmt, ohne zuvor an den eventuell Wärme ausstrahlenden Strahlungsquellen vorbeizuströmen.

2. Anlage nach Anspruch 1, **dadurch gekennzeichnet, dass** die die Strömungskanäle bildenden Elemente aus verformbaren Platten, vorzugsweise aus Blech, geformt sind.

3. Anlage nach Anspruch 1 oder 2, **dadurch gekennzeichnet, dass** zumindest zwei der die Strömungskanäle bildenden Elemente im oberen Bereich (30, 30') mittels Schienen, Klammern und/oder Kappen zusammengehalten werden, wodurch eine einfache Montage und oder Demontage ermöglicht ist.

4. Anlage nach einem der vorhergehenden Ansprüche, **dadurch gekennzeichnet, dass** die die Strömungskanäle bildenden Elemente zumindest doppelwandig sind, wobei die zumindest zwei Wände beabstandet sind, wodurch ein thermisch isolierender Spalt (S) gebildet wird.

5. Anlage nach Anspruch 1, **dadurch gekennzeichnet, dass** die Gasflussvorrichtung oberhalb der mindestens einen Strahlungsquelle einen zusätzlichen Gasauslass (405) aufweist.

## Claims

1. A system for the radiation treatment of substrates, which comprises, in a chamber, at least one radiation source (9, 9', 9") above the substrate holders (11, 11') to be loaded with substrates that are to be treated, the chamber comprises means for maintaining a gas flow in the chamber in the form of a gas flow device, wherein the chamber comprises at least one gas inlet (421, 421') disposed in the region below the substrate holder (11, 11') and at least one gas outlet (423) disposed in the region below the substrate holder (11, 11'), **characterized in that** the gas flow device is configured in such a manner that the gas inlet (421, 421') and said gas outlet (423) comprise elements that form flow conduits that narrow in the flow direction and expand again further downstream, whereby, during the operation of the system, a laminar flow prevails substantially at least at the gas flow device and therefore no deposits occur due to turbulence, wherein the gas flow device is designed in such a way that a gas flow is built up in the chamber that flows past the substrates immediately after entering the chamber and passing the flow conduits without previously flowing past the radiation sources, which may possibly emit heat.

2. The system according to claim 1, **characterized in that** the elements that constitute the flow conduits are formed out of deformable plates, preferably consisting of sheet metal.

3. The system according to claim 1 or 2, **characterized in that** at least two of the elements constituting the flow conduits are held together in the upper region (30, 30') by means of rails, clamps, and/or caps, whereby a simple assembly or disassembly is enabled.

4. The system according to any one of the preceding claims, **characterized in that** the elements constituting the flow conduits are at least double-walled, wherein the at least two walls are spaced apart from each other, whereby a thermally insulating gap (S) is formed.

5. The system according to claim 1, **characterized in that** the gas flow device has an additional gas outlet (405) above the at least one radiation source.

## Revendications

1. Installation de traitement de substrats par rayonnement, qui comprend au moins une source de rayonnement (9, 9', 9") dans une chambre au-dessus des porte-substrats (11, 11') à garnir avec des substrats à traiter, dans laquelle la chambre comprend des moyens pour maintenir un flux de gaz dans la chambre sous la forme d'un dispositif à flux de gaz, le dispositif à flux de gaz comprenant au moins une entrée de gaz (421, 421') agencée dans la zone au-dessous du porte-substrat (11, 11') et au moins une sortie de gaz (423) agencée dans la zone au-dessous du porte-substrat (11, 11'), **caractérisée en ce que** le dispositif à flux de gaz est réalisé de telle sorte que l'entrée de gaz (421, 421') et ladite sortie de gaz (423) comprennent des éléments qui forment des canaux d'écoulement qui se rétrécissent en direction du flux et qui s'élargissent à nouveau plus loin en aval, grâce à quoi, lors du fonctionnement de l'installation, un écoulement laminaire règne sensiblement au moins au niveau du dispositif à flux de gaz et il ne se produit donc pas de dépôts causés par des turbulences, le dispositif à flux de gaz étant conçu de telle sorte qu'un flux de gaz est établi dans la chambre qui passe le long des substrats directement après être entré dans la chambre et après avoir franchi les canaux d'écoulement, sans passer auparavant le long des sources de rayonnement émettant le cas échéant de la chaleur.

2. Installation selon la revendication 1, **caractérisée en ce que** les éléments formant les canaux d'écoulement sont mis en forme à partir de plaques déformables, de préférence en tôle.

3. Installation selon la revendication 1 ou 2, **caractérisée en ce qu'**au moins deux des éléments formant les canaux d'écoulement sont maintenus ensemble au moyen de rails, de pinces et/ou de coiffes, ce qui permet un montage et un démontage simples.

4. Installation selon l'une des revendications précédentes, **caractérisée en ce que** les éléments formant les canaux d'écoulement sont au moins à paroi double, lesdites au moins deux parois étant espacées, ce qui constitue une fente thermiquement isolante (S).

5. Installation selon la revendication 1, **caractérisée en ce que** le dispositif à flux de gaz présente une sortie de gaz supplémentaire (405) au-dessus de ladite au moins une source de rayonnement.
